(19) **Europäisches Patentamt**

**European Patent Office**

**Office européen des brevets**

(11) **EP 1 134 728 A1**

(12) **DEMANDE DE BREVET EUROPEEN**

(43) Date de publication:
**19.09.2001 Bulletin 2001/38**

(51) Int Cl.$^7$: **G10L 21/02**

(21) Numéro de dépôt: **01200842.1**

(22) Date de dépôt: **06.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **14.03.2000 FR 0003257**

(71) Demandeur: **Koninklijke Philips Electronics N.V. 5621 BA Eindhoven (NL)**

(72) Inventeur: **Charkani, Nabil 75008 Paris (FR)**

(74) Mandataire: **de la Fouchardière, Marie-Noelle Société Civile "SPID" 156, Boulevard Haussmann 75008 Paris (FR)**

(54) **Régénération de la composante basse fréquence d'un signal de parole à partir du signal en bande étroite**

(57) L'invention concerne un dispositif de mise en forme d'un signal, notamment d'un signal de parole occupant une certaine bande de fréquences et atténué au moins sur une partie basse de cette bande de fréquences. Elle consiste à régénérer la partie basse de la bande de fréquence par filtrage, le filtre à utiliser étant déterminé à partir du signal à régénérer, par exemple en appliquant une méthode de sélection par quantification vectorielle.

Applications : récepteurs des systèmes de transmission téléphoniques qui utilisent une bande étroite comprise entre 300Hz et 3400Hz; équipements audio susceptibles de subir une perte acoustique, par exemple haut-parleurs à haute impédance.

EP 1 134 728 A1

**Description**

Domaine de l'invention

L'invention concerne un système de transmission comportant au moins un émetteur pour transmettre un signal de parole dans une bande de fréquences étroite, et un récepteur pour recevoir ledit signal de parole.

L'invention concerne également un récepteur destiné à être utilisé dans un tel système de transmission, une méthode de traitement d'un signal de parole destinée à être utilisée dans un tel récepteur, et un programme d'ordinateur comportant des moyens de mise en oeuvre d'une telle méthode.

L'invention concerne enfin un dispositif de mise en forme d'un signal d'entrée, et en particulier un dispositif de mise en forme d'un signal de parole occupant une certaine bande de fréquences et susceptible d'être atténué au moins sur une partie basse de ladite bande de fréquences.

L'invention a d'importantes applications pour la téléphonie avec ou sans fil. De façon classique, le signal de parole, qui occupe initialement la bande de fréquences [100 Hz - 7000 Hz], est filtré à l'émission pour limiter la quantité d'informations à transmettre. Ce filtrage entraîne une atténuation de la bande basse [100 Hz - 300 Hz] et une perte de la bande haute [3400 Hz - 7000 Hz]. Il en résulte une dégradation de la qualité du signal.

L'invention s'applique également à des équipements audio susceptibles de subir une perte acoustique, comme par exemple les haut-parleurs qui utilisent la technologie dite de haute impédance. Le principal inconvénient de cette technologie est que lorsque l'oreille n'est pas proche du haut-parleur, le signal sonore est largement atténué, surtout dans les fréquences basses.

Arrière plan technologique de l'invention

Le brevet US n°5,455,888 décrit une méthode de génération, à la réception, d'un signal artificiel dans la bande manquante haute [3400Hz - 7000Hz]. Cette méthode consiste à déterminer, à partir du signal reçu, un filtre qui modélise la réponse fréquentielle de l'appareil vocal dans la bande étroite [300 Hz - 3400Hz]. Le filtre inverse est ensuite appliqué au signal reçu pour obtenir le signal d'excitation correspondant dans la bande étroite. Ces deux composantes (réponse fréquentielle de l'appareil vocal et signal d'excitation) sont ensuite élargies indépendamment l'une de l'autre. En particulier, une technique de quantification vectorielle est utilisée pour déterminer à partir du filtre qui modélise la réponse de l'appareil vocal dans la bande étroite, un filtre qui modélise la réponse de l'appareil vocal dans la bande élargie [300 Hz - 7000Hz]. L'excitation élargie est ensuite appliquée au filtre qui modélise la réponse de l'appareil vocal dans la bande élargie, pour obtenir un signal de parole dans la bande élargie.

Cette méthode nécessite un grand nombre de calculs. Elle est donc coûteuse en termes de temps et de ressources.

Résumé de l'invention

Un premier but de l'invention est de proposer une méthode simple d'amélioration de la qualité du signal reçu. Pour cela, un système de transmission selon l'invention et tel que décrit dans le paragraphe introductif est caractérisé en ce que ledit récepteur comporte des moyens de sélection d'un filtre de régénération à partir du signal reçu, et des moyens de traitement du signal reçu avec ledit filtre de régénération 'pour régénérer une bande de fréquences basse par rapport à ladite bande étroite.

L'invention tire partie du fait que les fréquences basses du signal de parole sont atténuées mais ne sont pas totalement supprimées. Le signal reçu contient donc des informations sur la partie basse de la bande. Conformément à l'invention ces informations sont utilisées pour déterminer le filtre à appliquer pour régénérer la bande de fréquences basse.

Dans un premier mode de réalisation, les caractéristiques du filtre de régénération sont telles que le filtre de régénération n'amplifie aucune fréquence et délivre un signal qui occupe seulement ladite bande basse, et lesdits moyens de traitement comportent des moyens d'amplification variable du signal délivré par le filtre de régénération, pour fournir un signal non saturé ayant une dynamique maximum, et des moyens de combinaison du signal ainsi amplifié et du signal reçu dans la bande étroite pour produire un signal de parole régénéré. Ce mode de réalisation est particulièrement avantageux lorsqu'on utilise un processeur à précision fixe pour faire les calculs puisque le risque de saturation est particulièrement important avec ce type de processeurs.

Dans un second mode de réalisation, les caractéristiques du filtre de régénération sont telles qu'il amplifie les composantes du signal contenues dans ladite bande basse, et qu'il génère directement le signal de parole régénéré. Ce mode de réalisation est plus particulièrement adapté à l'utilisation d'un processeur à virgule flottante.

Un deuxième but de l'invention est de proposer un dispositif de mise en forme d'un signal. Un dispositif selon l'invention et tel que décrit dans le paragraphe introductif, de mise en forme d'un signal d'entrée, est caractérisé en ce qu'il comporte des moyens de filtrage sans amplification pour délivrer un premier signal de sortie, et des moyens d'amplification variable dudit premier signal de sortie en fonction de son amplitude maximum, pour délivrer un second signal de sortie non saturé, ayant une dynamique maximum.

Un tel dispositif de mise en forme d'un signal présente l'avantage de traiter séparément la forme et le gain à appliquer au signal à remettre en forme, et donc de permettre de contrôler le gain pour obtenir une dynamique maximum tout en évitant de saturer le signal. Ce type de dispositif de mise en forme de signaux est particulièrement bien adapté aux équipements électroniques qui utilisent des processeurs à précision fixe.

Un troisième but de l'invention est de proposer un dispositif de mise en forme d'un signal de parole occupant une certaine bande de fréquences et susceptible d'être atténué au moins sur une partie basse de ladite bande de fréquences. Conformément à l'invention, un tel dispositif est caractérisé en ce qu'il comporte des moyens de sélection d'un filtre à partir dudit signal de parole, et des moyens de traitement dudit signal de parole avec ledit filtre pour rehausser une bande de fréquences basse par rapport à ladite bande étroite. Un tel dispositif est par exemple utilisé dans un équipement audio doté d'un haut-parleur fonctionnant selon la technologie dite de haute impédance, pour mettre en forme le signal appliqué audit haut-parleur.

## Brève description des dessins

L'invention sera mieux comprise et d'autres détails apparaîtront dans la description qui va suivre en regard des dessins annexés qui sont donnés à titre d'exemples non limitatifs et dans lesquels :

- la figure 1 représente, sous forme de blocs fonctionnels, un modèle en bande de base d'un système de transmission téléphonique,
- la figure 2 représente un exemple de moyens de sélection de filtre,
- la figure 3 représente un exemple d'un premier mode de réalisation d'un dispositif selon l'invention de mise en forme d'un signal,
- la figure 4 représente un exemple d'un second mode de réalisation d'un dispositif selon l'invention de mise en forme d'un signal,
- la figure 5 représente, dans un contexte plus général, un dispositif selon l'invention de mise en forme d'un signal d'entrée qui permet de traiter séparément la forme et le gain dudit signal,
- la figure 6 représente un exemple d'équipement audio comportant un haut parleur haute impédance, et un dispositif selon l'invention de mise en forme du signal de parole appliqué audit haut parleur.

## Description de modes de réalisation préférentiels

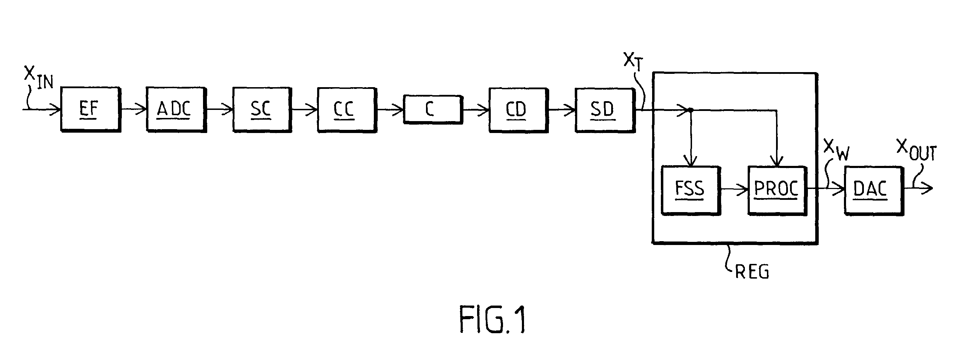

Sur la figure 1, on a représenté, sous forme de blocs, un modèle en bande de base d'un système de transmission téléphonique. Au niveau de l'émetteur ES, le signal de parole $X_{IN}$ est filtré par un filtre d'émission EF dans la bande [300 Hz - 3400 Hz] avant d'être appliqué à un convertisseur analogique / numérique ADC, puis à un codeur de source SC pour réduire la quantité d'informations à transmettre, et enfin à un codeur de canal CC pour protéger les données à transmettre. Après transmission sur le canal C, les opérations inverses sont réalisées au niveau du récepteur RS: le signal transmis est décodé par un décodeur de canal CD puis par un décodeur de source SD. Un signal numérique $X_T$ est disponible en sortie du décodeur de source SD. Ce signal $X_T$ est traité conformément à l'invention par un dispositif de mise en forme de signal REG. Le dispositif REG comporte des moyens FSS de sélection d'un filtre de régénération RF. Les caractéristiques du filtre de régénération RF sont transmises à des moyens PROC de traitement du signal reçu $X_T$. Les moyens de traitement PROC utilisent le filtre de régénération RF pour délivrer un signal de parole régénéré $X_W$. Le signal régénéré $X_W$ est appliqué à un convertisseur numérique / analogique DAC qui délivre un signal de sortie $X_{OUT}$.

Dans l'exemple décrit ici, les moyens de sélection FSS utilisent une méthode de classification par quantification vectorielle. Ceci n'est pas limitatif et d'autres méthodes de classification sont applicables, par exemple une méthode à base de réseaux de neurones.

De façon classique, les méthodes de classification par quantification vectorielle comportent une phase d'apprentissage et une phase de traitement. La phase d'apprentissage consiste à établir des relations entre des éléments d'un ensemble de départ et des éléments d'un ensemble d'arrivée pour établir des classes, puis à associer une ou plusieurs caractéristique à chacune des classes qui ont été établies. La phase de traitement consiste à analyser un signal d'entrée pour le classer dans l'une des classes qui ont été établies pendant la phase d'apprentissage.

Pour plus de détails sur les techniques de quantification vectorielle, on se reportera par exemple à l'article de Y. Linde, A. Buzo et R. M. Gray intitulé « An algorithm for Vector Quantizer Design » et publié dans la revue « IEEE Transactions on communications », volume COM-28, N°1, janvier 1980.

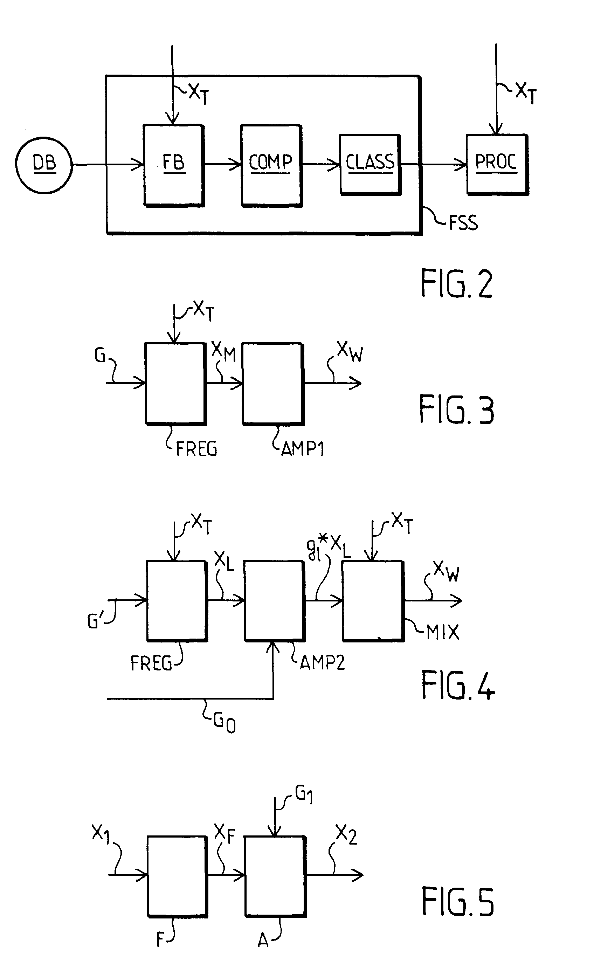

Comme indiqué sur la figure 2 les moyens de sélection FSS utilisent un banc de filtres FB qui a pour fonction de projeter le signal de parole $X_T$ dans différentes bandes de fréquences, par exemple dans les bandes B1=[100Hz - 200Hz], B2=[200Hz - 300Hz], et B3=[300Hz - 1000Hz]. Un bloc de calcul COMP calcule l'énergie E1, E2 et E3 dans chacune de ces bandes, puis détermine des rapports R1 et R2 entre ces énergies: R1= E1/E3 et R2= E2/E3.

Une classification est établie pendant la phase d'apprentissage, hors communication. Pour cela, les signaux d'une base de données de signaux de parole DB sont appliqués au banc de filtres FB. Puis les énergies E1, E2 et E3, et les rapports R1 et R2 sont calculés et mémorisés pour chaque signal.

On considère ensuite différents filtres d'émission susceptibles d'être utilisés par un émetteur. Et on filtre les signaux de la base de données avec ces différents filtres avant de les appliquer au banc de filtres FB. Des énergies E1', E2' et E3', et des rapports R1' et R2' sont alors calculés pour chacun des signaux issus du banc de filtre FB.

Des correspondances sont ensuite établies entre les rapports R1 et R2 d'une part et les rapports R1' et R2' d'autre part. Une opération de quantification permet ensuite de regrouper ces correspondances en un certain nombre de classes. Puis pour chaque classe, on définit les caractéristiques d'un filtre de régénération optimal.

En communication, le signal reçu $X_T$ est appliqué au banc de filtres FB. Les énergies E1, E2 et E3 et les rapports R1 et R2 sont calculés pour ce signal reçu $X_T$. Les rapports R1 et R2 sont ensuite utilisés par un bloc de classification CLASS pour déterminer la classe à laquelle appartient le signal de parole reçu $X_T$. A cette classe sont associées les caractéristiques d'un filtre de régénération. Ces caractéristiques sont transmises aux moyens de traitement PROC.

Dans un premier mode de réalisation représenté sur la figure 3, les moyens de traitement PROC comportent des moyens de filtragé FREG. Le gabarit G du filtre de régénération à utiliser est transmis à ces moyens de filtrage FREG pour filtrer le signal reçu $X_T$. Les moyens de filtrage FREG délivrent directement un signal $X_M$ dans la bande [100Hz - 3400Hz], en amplifiant seulement les fréquences basses du signal reçu $X_T$. De façon avantageuse, les moyens de traitement PROC comportent en plus un amplificateur AMP1 qui applique un gain variable au signal $X_M$ de façon à obtenir un signal de parole régénéré $X_W = g_M{}^*X_M$ non saturé et ayant une dynamique maximum. Dans la suite de la description, on considère que la saturation est atteinte lorsque l'amplitude d'un signal dépasse +1 en valeur absolue. Le gain $g_M$ s'écrit donc par exemple :

$$g_M = \min\left(1, \frac{\alpha}{pic_M}\right)$$

où $\alpha$ = 0,95 par exemple, et où $pic_M$ est la valeur maximum de l'enveloppe du signal $X_M$.

Dans un second mode de réalisation représenté sur la figure 4, le filtre de régénération à utiliser est découpé en un filtre de régénération normalisé (c'est-à-dire d'amplitude maximum égale à 0dB) et un gain constant Go. Les moyens de traitement PROC comportent en plus des moyens de filtrage FREG, un amplificateur AMP2 et un mélangeur MIX. Le gabarit G' du filtre normalisé est transmis aux moyens de filtrage FREG pour filtrer le signal reçu $X_T$. Les moyens de filtrage FREG fournissent ainsi un signal $X_L$ non amplifié qui occupe la bande de fréquence basse [100 Hz - 300 Hz]. Par ailleurs le gain constant Go est transmis à l'amplificateur AMP2. Et l'amplificateur AMP2 applique au signal $X_L$ un gain variable $g_L$ défini de la façon suivante :

$$g_L = \min\left(G_0, \frac{\alpha}{pic_L}\right)$$

où $pic_L$ est la valeur maximum de l'enveloppe du signal $X_L$.

Le mélangeur MIX mélange le signal amplifié $g_L{}^*X_L$ et le signal reçu $X_T$ pour délivrer un signal de parole régénéré $X_W$. De façon préférentielle, le mélangeur MIX introduit un gain variable $g_W$ sur le signal amplifié $g_L{}^*X_L$ et sur le signal reçu $X_T$ de telle sorte que le signal de parole régénéré s'écrit :

$$X_W = g_W{}^* g_L{}^* X_L + g_W{}^* X_T.$$

Le gain $g_W$ est par exemple défini de la façon suivante :

$$g_W = \min\left(1, \frac{\alpha}{g_L {}^* pic_L + pic_T}\right)$$

où $pic_T$ est la valeur maximum de l'enveloppe du signal $X_T$.

Dans ce second mode de réalisation, la forme et le gain du signal régénéré sont traités séparément ce qui permet de contrôler le gain pour obtenir une dynamique maximum tout en évitant de saturer le signal. Ce mode de réalisation est particulièrement bien adapté aux récepteurs qui utilisent des processeurs à précision fixe.

Tous les moyens qui viennent d'être décrits sous forme d'un schéma en blocs sont avantageusement constitués par un ou plusieurs éléments de programme, stockés dans la mémoire d'un ensemble à microprocesseur et destinés à être exécutés par ledit processeur.

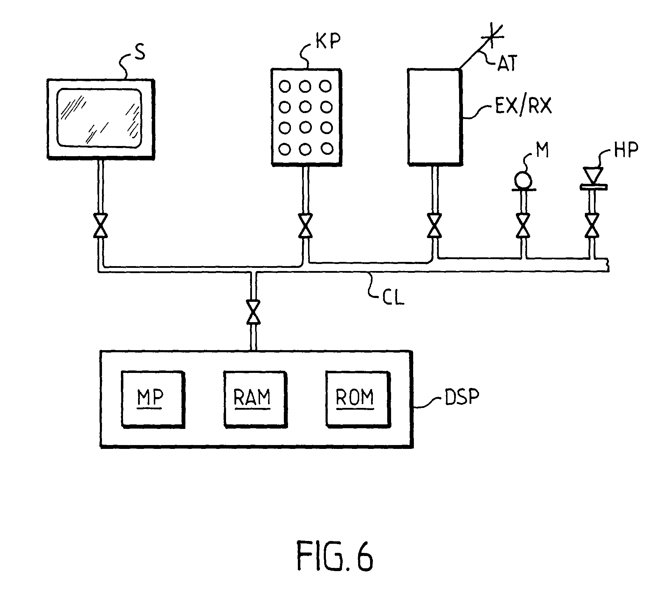

Sur la figure 5 on a représenté dans un contexte plus général un dispositif de mise en forme d'un signal d'entrée, qui permet de traiter séparément la forme et le gain dudit signal, pour obtenir une dynamique maximum tout en évitant la saturation. Ce dispositif comporte un filtre normalisé F et un amplificateur variable A. Le filtre normalisé F filtre un signal d'entrée $X_1$ sans l'amplifier, et il fournit à l'amplificateur A un signal filtré $X_F$. L'amplificateur A applique au signal filtré $X_F$ un gain variable $g_F$ qui dépend d'un gain constant $G_1$ et de la valeur maximum $pic_F$ de l'enveloppe du signal filtré. Si l'on considère que la saturation est atteinte lorsque l'amplitude d'un signal dépasse +1 en valeur absolue, le gain variable $g_F$ s'écrit par exemple :

$$g_F = \min\left( G1, \frac{\alpha}{\text{pic}_F} \right)$$

avec $\alpha = 0{,}95$. L'amplificateur A délivre un signal non saturé $X_2$ dont la dynamique est maximum.

Sur la figure 6, on a représenté un exemple d'équipement audio comportant un dispositif selon l'invention de mise en forme d'un signal de parole. Cet équipement est un téléphone mobile doté d'un microphone M, d'un clavier KP, d'un écran S, d'un haut-parleur haute impédance HP, d'une antenne AT, d'un ensemble d'émission / réception EX/RX, et d'un ensemble à microprocesseur DSP qui sont reliés par une ligne commune CL. L'ensemble à microprocesseur DSP régit le fonctionnement de l'appareil. Il comporte un microprocesseur MP, une mémoire vive RAM et une mémoire morte ROM. Dans la mémoire morte ROM sont notamment stockés des programmes de fonctionnement de l'appareil, notamment un programme de mise en oeuvre du dispositif selon l'invention de mise en forme d'un signal de parole. Ce programme est destiné à être exécuté par le microprocesseur MP juste avant que celui-ci transmette un signal de parole au haut-parleur haute impédance. Ainsi, la partie basse de la bande de fréquences du signal de parole est rehaussée à priori, avant transmission du signal au haut parleur. L'atténuation des fréquences basses du signal de parole à la sortie du haut parleur haute impédance est donc réduite.

**Revendications**

1. Système de transmission comportant au moins un émetteur (ES) pour transmettre un signal de parole ($X_{IN}$) dans une bande de fréquences étroite, et un récepteur (RS) pour recevoir ledit signal de parole, **caractérisé en ce que** ledit récepteur comporte des moyens (FSS) de sélection d'un filtre de régénération (FREG) à partir du signal reçu ($X_T$), et des moyens (PROC) de traitement du signal reçu avec ledit filtre de régénération pour régénérer une bande de fréquences basse par rapport à ladite bande étroite.

2. Système de transmission selon la revendication 1, **caractérisé en ce que** lesdits moyens de traitement comportent des moyens (FB, COMP, CLASS) d'analyse et de classification du signal reçu pour établir une correspondance entre ledit signal reçu ($X_{IN}$) et un filtre de régénération (FREG).

3. Système de transmission selon la revendication 1, **caractérisé en ce que** les caractéristiques du filtre de régénération sont telles que le filtre de régénération n'amplifie aucune fréquence et délivre un signal ($X_L$) qui occupe seulement ladite bande basse, et en ce que lesdits moyens de traitement comportent des moyens (AMP2) d'amplification variable du signal délivré par le filtre de régénération, pour fournir un signal non saturé ayant une dynamique maximum ($g_L^*X_L$), et des moyens (MIX) de combinaison du signal ainsi amplifié et du signal reçu ($X_T$) dans la bande étroite pour produire un signal de parole régénéré ($X_W$).

4. Système de transmission selon la revendication 3, **caractérisé en ce que** lesdits moyens de combinaison introduisent un gain variable ($g_W$) sur le signal amplifié ($g_L^*X_L$) et sur le signal reçu ($X_T$) pour fournir un signal de parole régénéré non saturé ayant une dynamique maximum ($X_W$).

5. Récepteur comportant des moyens de réception pour recevoir un signal de parole transmis dans une bande de fréquence étroite,
**caractérisé en ce qu'**il comporte des moyens (FSS) de sélection d'un filtre de régénération (FREG) à partir du signal reçu ($X_T$), et des moyens (PROC) de traitement du signal reçu avec ledit filtre de régénération pour régénérer une bande de fréquences basse par rapport à ladite bande étroite.

6. Récepteur selon la revendication 5, **caractérisé en ce que** les caractéristiques du filtre de régénération sont telles que le filtre de régénération n'amplifie aucune fréquence et délivre un signal ($X_L$) qui occupe seulement ladite bande basse, et en ce que lesdits moyens de traitement (PROC) comportent des moyens (AMP2) d'amplification variable du signal délivré par le filtre de régénération, pour fournir un signal non saturé ayant une dynamique maximum ($g_L^*X_L$), et des moyens de combinaison (MIX) du signal ainsi amplifié ($g_L^*X_L$) et du signal reçu ($X_T$) dans la bande étroite pour produire un signal de parole régénéré ($X_W$).

7. Dispositif de mise en forme d'un signal d'entrée ($X_T$, $X_1$), **caractérisé en ce qu'**il comporte des moyens de filtrage sans amplification (FREG, F1) pour délivrer un premier signal de sortie ($X_L$, $X_F$), et des moyens (AMP2, A) d'amplification variable dudit premier signal de sortie en fonction de son amplitude maximum (pic$_L$, pic$_F$), pour délivrer un second signal de sortie ($g_L^*X_L$, $X_2$) non saturé, ayant une dynamique maximum.

8. Dispositif de mise en forme d'un signal de parole occupant une certaine bande de fréquences et susceptible d'être atténué au moins sur une partie basse de ladite bande de fréquences, **caractérisé en ce qu'**il comporte des moyens (FSS) de sélection d'un filtre (FREG) à partir dudit signal de parole, et des moyens (PROC) de traitement dudit signal de parole avec ledit filtre pour rehausser une bande de fréquences basse par rapport à ladite bande étroite.

9. Méthode de traitement d'un signal de parole transmis dans une bande de fréquences étroite, **caractérisé en ce qu'**elle comporte une étape (FSS) de sélection d'un filtre de régénération (FREG) à partir du signal reçu ($X_T$), et une étape (PROC) de traitement du signal reçu avec ledit filtre de régénération pour régénérer une bande de fréquences basse par rapport à ladite bande étroite.

10. Méthode de traitement d'un signal de parole selon la revendication 9, **caractérisé en ce que** les caractéristiques du filtre de régénération sont telles que le filtre de régénération n'amplifie aucune fréquence et délivre un signal ($X_L$) qui occupe seulement ladite bande basse, et en ce que ladite étape de traitement comporte une étape (AMP2) d'amplification variable du signal délivré par le filtre de régénération, pour fournir un signal non saturé ayant une dynamique maximum ($g_L{}^*X_L$), et une étape (MIX) de combinaison du signal ainsi amplifié et du signal reçu dans la bande étroite pour produire un signal de parole régénéré ($X_W$).

FIG.1

FIG.2

FIG.3

FIG.4

FIG.5

FIG.6

**Office européen des brevets**

**RAPPORT DE RECHERCHE EUROPEENNE**

Numéro de la demande

EP 01 20 0842

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 455 888 A (IYENGAR ET AL) 3 octobre 1995 (1995-10-03) | 1,2,5,8, 9 | G10L21/02 |
| Y | * abrégé; figures 1,3,5 * | 3,4,6,10 | |
| X | US 5 388 185 A (TERRY ET AL) 7 février 1995 (1995-02-07) | 7 | |
| Y | * abrégé * | 3,4,6,10 | |
| A | EP 0 658 874 A (GRUNDIG EMV) 21 juin 1995 (1995-06-21) * abrégé * | 1,2,5,8, 9 | |
| A | US 5 978 759 A (TSUSHIMA ET AL) 2 novembre 1999 (1999-11-02) * abrégé; figures 1,4,6 * | 1,5,7-9 | |
| P,A | EP 0 994 464 A (KONINKL PHILIPS ELECTRONICS NV) 19 avril 2000 (2000-04-19) * abrégé * | 1,5,7-9 | |

DOMAINES TECHNIQUES RECHERCHES (Int.Cl.7)

G10L
H04B
H03G

Le présent rapport a été établi pour toutes les revendications

| Lieu de la recherche | Date d'achèvement de la recherche | Examinateur |
|---|---|---|
| LA HAYE | 24 avril 2001 | Quélavoine, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**         EP 01 20 0842

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2001

| Document brevet cité au rapport de recherche | | Date de publication | Membre(s) de la famille de brevet(s) | | Date de publication |
|---|---|---|---|---|---|
| US 5455888 | A | 03-10-1995 | AUCUN | | |
| US 5388185 | A | 07-02-1995 | AUCUN | | |
| EP 0658874 | A | 21-06-1995 | DE | 4343366 A | 22-06-1995 |
| | | | DE | 59408580 D | 09-09-1999 |
| US 5978759 | A | 02-11-1999 | JP | 8248997 A | 27-09-1996 |
| | | | JP | 2798003 B | 17-09-1998 |
| | | | JP | 8305396 A | 22-11-1996 |
| | | | JP | 2956548 B | 04-10-1999 |
| | | | JP | 9101798 A | 15-04-1997 |
| | | | EP | 0732687 A | 18-09-1996 |
| EP 0994464 | A | 19-04-2000 | CN | 1254221 A | 24-05-2000 |
| | | | JP | 2000172300 A | 23-06-2000 |

EPO FORM P0460

Pour tout renseignement concernant cette annexe : voir Journal Officiel de l'Office européen des brevets, No.12/82